(19) Europäisches Patentamt
European Patent Office
Office européen des brevets

(11) Publication number: **0 139 930**
**A1**

(12) **EUROPEAN PATENT APPLICATION**

(21) Application number: 84109432.9

(51) Int. Cl.$^4$: **C 08 F 6/02**

(22) Date of filing: 08.08.84

(30) Priority: 08.08.83 US 521294

(43) Date of publication of application:
08.05.85 Bulletin 85/19

(84) Designated Contracting States:
BE DE FR GB IT NL SE

(71) Applicant: THE DOW CHEMICAL COMPANY
Dow Center 2030 Abbott Road Post Office Box 1967
Midland Michigan 48640(US)

(72) Inventor: Christenson, Christopher P.
60 So. Shamrock Court
Lake Jackson Texas(US)

(72) Inventor: Henslee, Walter W.
58 So. Shamrock Court
Lake Jackson Texas(US)

(72) Inventor: Strother, Greene W., Jr.
Rt. 1 Box 1434
Brazoria Texas(US)

(72) Inventor: Hairston, Thomas J.
104 Rose Trail
Lake Jackson Texas(US)

(72) Inventor: Niswander, Ronnie H.
62 Hollyhock Court
Lake Jackson Texas(US)

(74) Representative: Casalonga, Axel et al,
BUREAU D.A. CASALONGA OFFICE JOSSE & PETIT
Baaderstrasse 12-14
D-8000 München 5(DE)

(54) **Process for deactivating and neutralizing polymerization catalysts.**

(57) Processes for deactivating catalysts which may alter the polymer after formation if left in their active state. If such catalysts are acids or if acid is produced during the process of deactivation, the acid may be effectively neutralized by a catalyst deactivator represented by the general formula $A_x^aB_{1-x}^b(OH)_yC_z^c \cdot nH_2O$, wherein A and B are each one or more metal elements having valences a and b of 1 or 2 and 2 or 3 respectively, z=0 to (ax+b(1−x)−y)/c, x has a value of from >0 to <1, y has a value of from >2 to about ax+b(1−x)−cz, n has a value from 0 to about 1, C is an anion having a valence c of 1, 2 or 3.

EP 0 139 930 A1

Croydon Printing Company Ltd.

0139930

# PROCESS FOR DEACTIVATING AND NEUTRALIZING POLYMERIZATION CATALYSTS

## BACKGROUND OF THE INVENTION

In the production of polymeric materials catalysts are employed in the polymerization processes. In order to prevent continued polymerization downstream of the reactor(s), the catalyst is usually deactivated at some point after the desired reaction. Such catalysts may be acids or produce acids upon deactivation. Such acid is corrosive in nature to process equipment and detrimental to product properties if not adequately neutralized.

Exemplary of processes employing components which require deactivation are polymerization processes using halogen containing catalysts which remain in the polymer, for example, the Ziegler catalysts used in the polymerization of olefins in slurry, solution and high pressure processes. These catalysts require deactivation to prevent further polymerization as well as, in some instances, neutralization of the acidic moieties to obtain good quality products.

Normally deactivation of the transition metal-containing catalyst is done following completion of the reaction but prior to separation of the polymer from the reaction medium. Often HCl or other hydrogen halide is produced by reaction of the catalyst and/or support with the deactivator and/or water contained therewith. It is preferable that such hydrogen halide is also neutralized by the catalyst deactivator, thereby reducing or eliminating subsequent corrosion to process equipment.

Compositions of the present invention will also be effective in deactivating Lewis acid, Bronsted acid, metal alkyl catalysts, and the like, for example, aluminum chloride used for the production of ethyl benzene, sulfuric acid used in the synthesis of polyesters, zinc chloride used in the vulcanization of neoprene rubber and aluminum alkyls used in the preparation of α-olefins such as 1-octene.

Most conventional catalyst deactivators, e.g., water, alcohols, amines, and carboxylic acids, besides forming corrosive hydrogen halides also can be carried over in the product and recycle systems if not removed. For example, Machon et al. U.S. 4,150,609 discloses the use of alkali metal and alkaline earth metal salts of carboxylic acids to deactivate the Ziegler catalyst in a high pressure, high temperature process for polyethylene. However, calcium stearate is known to cause problems during polymer processing by plating out out on chill rolls and the stearic acid formed by the neutralization of HCl or other hydrogen halide from catalyst residues is corrosive to processing equipment.

Therefore it would be advantageous to have available a material which would deactivate the catalyst and tie-up or scavenge such halogen or acidic components whenever produced. Thus it would be particularly advantageous to employ a catalyst deactivation agent which will not carry over in the recycle stream, which itself will neutralize the hydrogen halide when and if produced, and which would not later plate out or produce detrimental by-products. Furthermore, such deactivation agent should have little or no effect on polymer properties at levels sufficient to deactivate the catalyst or neutralize acidic components.

## DETAILED DESCRIPTION OF THE INVENTION

Suitable catalyst deactivation agents and acid scavengers employed herein are aluminate compositions of the general formula $A^a_x B^b_{1-x}(OH)_y C^c_z \cdot nH_2O$ wherein A and B are each one or more metal elements having valences of 1 or 2 and 2 or 3 respectively; $z=0$ to $(ax+b(1-x)-y)/c$; x has a value of from >0 to <1, y has a value of from >2 to about $ax+b(1-x)-cz$; n has a value from 0 to about 1; C is an anion having a valence of 1, 2 or 3 such as, for example, $CO_3^=$, $HCO_3^-$, $PO_4^{-3}$, $HPO_4^=$, $H_2PO_4^-$, $SO_4^=$, $HSO_4^-$, $S^=$, $HS^-$, $SO_3^{-2}$, $S_2O_5^{-2}$, $S_2O_4^{-2}$, $S_2O_2^{-2}$, $S_2^{-2}$, $CN^-$, $C_2^{-2}$, $I_3^-$, $HPO_3^{-2}$, $H_2P_2O_5^{2-}$, $NH^{2-}$, $NH_2^-$, $NHOH^-$, $N_2H_3^-$, $NO_2^-$, $ClO_2^-$, $ClO^-$, $O^{-2}$, $F^-$, $Cl^-$, $Br^-$, $I^-$, $RCO_2^-$, and $R(COO)_2^{-2}$, wherein R represents alkyl or aryl moieties. These compositions can be essentially pure compounds or mixtures of compounds which are generally formed under basic conditions and may contain certain amounts of inorganic impurities (e.g. $BO_x(OH)_{a-2x}$, $A(OH)_a$, $B(OH)_b$). Furthermore, these compositions may be modified by thermal treatment, i.e. heating above 200°C and preferably at 400°C to 1200°C. Their activity is usually reduced as the temperature is

increased. Such treatment may be necessary to moderate the hydroxyl activity for certain applications, for example, as a stabilizer in vinylidene chloride polymers or copolymers.

Particularly, suitable compositions include the metal aluminates described in U.S. Patents 4,284,762; 4,299,759; 4,379,882; 4,342,353; 4,348,296; 4,348,297; 4,392,961; 4,392,979; 4,392,980; and 4,400,431.

Alternatively, a product resulting from the surface coating of the compositions with surface active agents to improve dispersibility, can be employed in the present invention. Suitable anionic surface active agents include, for example, alkali metal and alkaline earth metal salts of higher fatty acids of the formula RCOOM and $(RCOO)_2M$ in which R is an alkyl group having 3 to 40 carbon atoms and M represents an alkali or alkaline earth metal atom; alkylsulfates of the formula $ROSO_3M$ and $(ROSO_3)_2M$ in which R and M are as defined above; alkylsulfonates of the formula $RSO_3M$ and $(RSO_3)_2M$ in which R and M are as defined above; alkylarylsulfonates of the formula R-aryl-$SO_3M$ and (R-aryl-$SO_3)_2M$ in which R and M are as defined above and the aryl group represents phenyl, naphthyl, tolyl, etc.; and sulfosuccinic ester salts expressed by the formula

$$\begin{matrix} ROCOCH_2 \\ | \\ ROCOCHSO_3M \end{matrix} \quad \text{and} \quad \left[\begin{matrix} ROCOCH_2 \\ | \\ ROCOCHSO_3 \end{matrix}\right]_2 M$$

in which R and M are as defined above. Also suitable are certain phosphate salts of the general formulas $(ROPO_3)M$, $(ROPO_3)M_2$, $((RO)_2PO_2)M$, and $((RO)_2PO_2)_2M$, where R and M are as defined above. Organic acids may

also be used as the surface coating agent. Thus, compounds corresponding to the formulas RCOOH, $ROSO_2OH$, $RSO_2OH$, $RPO(OH)_2$, and $(RO)_2POOH$ can be used in which R may be any alkyl and/or aryl group, as defined above, which produces a stable acid. Such acids often improve dispersibility of the inorganic composition.

Specific examples of anionic surfactants include calcium stearate, sodium stearate, potassium stearate, sodium oleate, magnesium oleate, potassium oleate, sodium palmitate, potassium palmitate, calcium laurate, sodium laurate, potassium laurate, sodium laurylbenzenesulfonate, potassium octadecylsulfate, sodium laurylsulfonate and disodium 2-sulfoethyl α-sulfostearate, calcium stearyl phosphate, disodium laural phosphate, and potassium distearyl phosphate. Specific examples of organic acid surfactants include stearic acid, palmitic acid, oleic acid, benzoic acid, ethyl hexanoic acid, and mixtures of these and other organic acids.

Exemplary catalysts employed in α-olefin polymerization and effectively deactivated by the process of the present invention include Ziegler-Natta catalysts as described by John Boor, Jr., in ZIEGLER-NATTA CATALYSTS AND POLYMERIZATIONS, 1979, Academic Press, Inc. and in U.S. Patnets 4,198,315; 4,319,011; 2,846,425; 4,124,532; 3,989,878; 4,088,812; and 3,541,074. The halogen can be a portion of the active catalyst or the support such as a magnesium chloride supported catalyst.

Other polymerization catalysts which can be deactivated by the process herein include the inorganic oxide supported chromium catalysts such as those described

in U.S. Patents 2,825,721; 4,169,925; 4,199,773; and 4,053,435.

Other examples of resins containing halogens and/or acidic components in this invention include thermoplastic resins produced by using catalysts containing halogens and/or acidic components such as boron trifluoride, tin tetrachloride, sulfuric acid or hydrochloric acid and containing halogen and/or acidic subcomponents derived from these catalysts, for example, styrene resins such as polystyrene, AS resin (acrylonitrile-styrene copolymer), ABS resin (acrylonitrile/butadiene/ styrene copolymer), BS resin (butadiene/styrene copolymer), acrylic resins such as polyacrylates and methacrylic resins such as polymethacrylates; halogen-containing thermoplastic vinyl resins such as vinyl chloride polymer or copolymers such as vinyl chloride/vinyl acetate resin, vinylidene polymer or copolymers, fluororethylene polymers or copolymer and polymer blends contaning vinyl chloride resins; chlorine or fluorine-containing rubbers such as chlorinated polyvinyl chloride, chloroprene and chlorinated isobutylene rubber and fluorinated rubber; and halogen-containning thermoplastic resins such as post-chlorinated vinyl chloride polymer or copolymers, polytetrafluoroethylene, fluorinated ethylene-propylene copolymer, polychlorotrifluoroethylene acetate--containing thermoplastic resins such as polyvinyl acetate or ethylenevinylacetate copolymer, and blends of these resins with each other or with other resins.

The compound may be conveniently injected into the polymer at the point where the polymer exits the reactor, usually together with antioxidants and/or

other additives and/or other polymers if a blend of polymers is desired. However, the compound can be added at any place desired after the reactor system or the last of any reactor series or reaction zones when a plurality thereof is employed, i.e, at any point downstream of the reactors including a melt extruder, where good dispersion of the compound throughout the polymer can be accomplished.

In the practice of this invention, the composition is used in an amount of 0.01 to 5, preferably 0.01 to 2, more preferably 0.01 to 1.0, and especially preferably 0.05 to 1.0 part by weight per 100 parts by weight of polymer.

It is preferable that the composition is usually slurried, dispersed or milled in a suitable inert diluent which is compatible with the polymer. Also, the suspendability of the composition in the inert diluent is improved when the particle size is very small, i.e., less than 20 microns (μm), especially less than five microns for maximum reactivity and use in film applications. In addition, suitable suspending agents may also be used in an amount that is less than 10% by weight relative to the inorganic composition.

The particle size of the composition should also be small enough as not to be detrimental to polymer properties. Especially important is film clarity which is affected by the perceivable particle size of the inorganic composition. Typically a particle size of less than 20 microns, especially less than five microns, depending upon the type of polymer and film thickness is acceptable.

Suitable methods to achieve particle or agglomerate size distribution less then twenty microns include conventional ball milling (wet or dry), vibratory milling, jet milling and similar methods, with or without milling aids. Wet vibratory milling or jet milling with size separation and recycle, are preferred when a very small particle size (i.e. less than five microns) is desired, for example in polyethylene which is to be ultimately used to prepare films. Milling aids, as discussed below, are also helpful. Reactor conditions, post treatment and aging, or the use of flocculants can also affect crystallite agglomeration.

The deactivation of catalysts for polymerization or copolymerization reactions to which the present invention is directed is generally carried out continuously. Therefore, the deactivator compound is most conveniently injected into the reaction mixture at the point where the polymer solution exits the reactor, usually together with antioxidants, other additives and/or other polymers if a blend of polymers is desired. However, the compound can be added at any place desired which is after the reactor system, i.e. the last of any reactor series or reaction zones when a plurality thereof is employed, as well as to any vessel for separating the polymer from the reaction medium.

The compositions of the present invention may also be added to the polymer at any point downstream of the reactors , e.g. to the separators or in batch operations after the reaction has progressed to the desired degree, where good dispersion of the compound throughout the polymer can be accomplished to improve the color (whiteness) and increased neutralization of acidic components.

The deactivation of polyolefin polymerization catalysts is advantageously employed with polymerization processes conducted at a temperature of from 50°C to 300°C and a pressure of 150 psig (1.1 MPa) to 25000 psig (170 MPa). Further, in the case of polyethylene and copolymers of polyethylene, the processes commercially practiced are slurry, solution and high pressure reactions using stirred autoclave or tubular reactors singularly or in series. In the polymerization reaction it is, of course, possible to use known processes for regulating the molecular weight of the polymers, or improving the properties of the resulting products by adding suitable transfer agents or other additives into the polymerization reactor, or at the outlet or some point downstream.

Examples of additives conventionally found in the final polymer blends are antioxidants such as 2,6-di-t-butyl-p-cresol, 2,5,-di-t-butyl hydroquinone, 2,2'-methylenebis(4-methyl-6-t-butylphenol), 4,4'-thiobis-6-5-butylphenol), 4,4'-thiobis-(6-t-butyl-m-cresol), and octadecyl-3-(3',5'-di-t-butyl-4'-hydroxyphenyl) propionate; ultraviolet absorbers such as 2-hydroxy-4-octoxybenzophenone, 2-(2'-hydroxy-5-methylphenyl) benzotriazole and ethyl 2-cyano-3,3-diphenylacrylate; antistatic agents such as pentaerythritol monostearate, sorbitan monopalmitate, polyethylene oxide and carbowax; lubricants such as calcium stearate, zinc stearate, butyl stearate and ethylenebis stearamide; plasticizers such as dimethyl phthalate, diethyl phthalate, olefic acid esters, phosphoric acid esters, waxes, and liquid paraffin; coloring agents such as carbon black, phthalocyanine, quinacridone, indoline, azo pigments, titanium oxide

and red iron oxide; and fillers such as asbestos, glass fibers, talc, mica, wallastonite, calcium silicate, aluminum silicate and calcium carbonate.

The amounts of these additives can be selected as desired. For example, the amounts based on the weight of the olefin resin are typically 0.01 to 1% for antioxidants, ultraviolet absorbers, and antistatic agents, 0.1 to 5% for coloring agents and lubricants; 0.1 to 10% for plasticizers; and 1 to 50% for fillers.

Other polymer forming processes which can advantageously employ the compositions of the present invention are those which employ halide containing catalysts which do not normally require deactivation but which release halogen atoms as a result of process conditions and/or lose small amounts of halogen from the backbone during processing. Such processes are those for producing vinyl halide resins, chlorinated polyethylene, and vinyl/vinylidene halide resins. The compounds of the present invention can be added following final reaction prior to pelletizing and/or powder formation as well as during melt extrusion to scavenge halide. In some instances compounds have been found to dehydrohalogenate or dehalogenate the backbone and it is necessary to employ the less active forms of the compounds such as those compounds formed by heating above 200°C and preferably at 400°C to 1200°C.

The following examples are illustrative of the present invention. Unless otherwise indicated, all parts and percentages are by weight.

General Procedures Relative to Deactivation of Olefin Polymerization Catalysts

A. Catalyst Preparation

To 1610 kg (3550 pounds) of Isopar® E, an isoparaffinic hydrocarbon fraction having a boiling range of 116°-134°C, was added 699 kg (1540 pounds) of n-butyl,s-butyl magnesium solution (2.24% Mg) in Isopar® C, an isoparaffinc hydrocarbon fraction having a boiling range of 98°-106°C. A 47 kg (103 pound) portion of anhydrous HCl gas was added to the foregoing solution of the complex with agitation. The resultant slurry was cooled to ambient temperature (~25°C) and 167 kg (367 pounds) of a 4.6 wt. % ethylaluminum dichloride (EADC) solution in Isopar® E was added along with another 45 kg (100 pounds) of Isopar® E. To the above mixture was added 27 kg (60 pounds) of a 50 wt. % tetra(isopropoxy)-titanium solution in hexane. The resulting mixture was diluted to give 2722 kg (6000 pounds) of catalyst premix. This premix was activated with 10 wt. % triethylaluminum (TEA) in Isopar® E and added continuously to the reactor.

B. Polymerization Processes

1. Solution Process

Ethylene was copolymerized with 1-octene in a 18.9 kl (5000 gallon) stirred reactor to produce a copolymer having a melt flow value of 25 and density of 0.92 g/cc. Catalyst premix and triethylaluminum side stream were added to the reactor at a rate of 36.3 kg/hr (80 lbs/hr) and 0.45 kg/hr (1 lb/hr) respectively along with 2.14 kg/s (17,000 lbs/hr) of ethylene, 0.252 kg/s (2000 lbs/hr) of 1-octene, and 11.3 kg/s (90,000 lbs/hr) of Isopar® E. The total pressure in the reactor was 3203 kPa (450 psig). The relative amounts of catalyst premix, triethylaluminum and Isopar® E were varied to

maintain a reactor temperature of at least 185°C. The catalyst deactivator was added as a slurry in. Isopar® E continuously as the polymer solution existed from the reactor.

2. High Pressure Process

The examples of this process were conducted in a four zone stirred autoclave reactor. The reactor pressure was maintained at approximately 110 MPa (16000 psig). A mixture of ethylene and butene was added in the top zone of the reactor. The ratio of ethylene to butene was used to control the product density. The average residence time in the reactor was about 50 seconds. The activated catalyst was fed continuously into the top of the reactor at a rate sufficient to maintain the desired reactor temperature at the control point. There are seven entry or control points in the reactor. Point one was used to inject catalyst, point three was the temperature control point and point four was the entry point for the catalyst deactivator, a slurry of the catalyst deactivator in Isopar® E, in an amount sufficient to deactivate the catalyst as determined by the temperature profile in the reactor. Melt flow value of the final product was controlled by adding hydrogen at 0.1 to 0.2 mole percent of reactor feed.

C. Catalyst Deactivation

Definitive data for catalyst deactivation comes from the high pressure process. Conversion of olefin in this process is between 10 and 15%. The ΔT between point one and point three is an indication of the exothermic nature of the process. The addition of known catalyst deactivators at point four kills the

catalyst and the exotherm is effectively terminated. This can be seen by the ΔT between point three and point seven which is usually very small compared to the first ΔT. However, when no deactivating agent is used, or when the carrier alone is used, the $\Delta T_{7-3}$ is over 20°C (see Table 7).

Experiments 1 and 2 are examples of the invention and illustrate the effectiveness of the present invention in deactivating the catalyst compared to known catalyst deactivators and a control with no deactivator.

The data which are presented in Table 1 are an average of several one hour periods. The data are typical of results obtained during at least eight hours of continuous polymerization at constant conditions such that the melt flow value of the product was 20 ± 10 and the density was 0.918 ± 0.006. During runs where no catalyst deactivator was added, the control temperature had to be raised approximately 12°C in order to maintain these polymer properties. This is a further indication of the effectiveness of the compositions in terms of catalyst deactivation. Note that from the data of Table 1 while isopropyl alcohol is a better catalyst deactivator but suffers from the disadvantage of causing recycle contamination.

TABLE 1 - CATALYST DEACTIVATION

| Process Conditions | None | IPE[5] | CaSt.[6] | Ex.1[7,10] | Ex.2[8,11] | IPA[9] |
|---|---|---|---|---|---|---|
| Rate of addition[1], lbs/hr (g/sec) | -- | 7.0(57.1) | 3.0(24.5) | 2.4(19.6) | 3.2(26.1) | 3.7(30.2) |
| Production Rate, lbs/hr (g/sec) | 80 (10.0) | 76 (9.6) | 60 (7.6) | 59 (7.4) | 63 (7.9) | 82 (10.3) |
| Catalyst Efficiency[2] MM polymer/Ti | .588 | 1.081 | .833 | .555 | .909 | .588 |
| Level of Catalyst Deactivator in Polymer ppm[3] | -- | -- | 323 | 244 | 331 | 320 |
| TEMPERATURE PROFILE[4] | | | | | | |
| Temp. #1, °C | 190.1 | 186.1 | 177.1 | 179.1 | 176.3 | 177.9 |
| Temp. #3, °C | 204.0 | 202.5 | 190.9 | 193.4 | 191.2 | 192.5 |
| Temp. #7, °C | 225.2 | 225.5 | 194.2 | 197.5 | 193.8 | 194.2 |
| ΔT 3-1, °C | 12.9 | 16.4 | 13.8 | 14.3 | 14.9 | 14.6 |
| ΔT 7-3, °C[4] | 21.2 | 23.0 | 3.3 | 4.1 | 2.6 | 1.7 |

1 Concentration was approximately 0.5% in Isopar E®
2 Based on elemental analysis of the polymer
3 Based on elemental analysis of the polymer
4 Measure of the ability to deactivate the catalyst
5 Isopar E® (inert carrier for catalyst deactivators)
6 Calcium Stearate (comparative example) contains approximately 2.7 % absorbed water
7 Experiment #1: $Mg_{0.69}Al_{0.31}(OH)_2(CO_3)_{0.15}\cdot 0.54H_2O$ contains about 2% absorbed water

8 Experiment #2: $Mg_{0.5}Al_{0.5}(OH)_{2.5}Cl_{0.25}$ contains approximately 7% absorbed water

9 Isopropyl Alcohol (comparative example)
10 Less than 1 micron particle size
11 Less than 5 micron particle size

D. HCl Neutralization

Measurement - Reactor vent gas was passed through 1-3 ml of 0.01 N NaOH in about 150 ml of distilled degassed water until a phenolphthalein end point was reached. The volume of gas required was measured by a conventional bag meter which had been previously calibrated. The amount of HCl in the gas stream was calculated using the volume of gas required for end point. The procedure was repeated several times for an average determination. For those experiments where the composition contained carbonate anion, HCl neutralization may produce $CO_2$ which will interfer with the HCl determination. In this case, the scrubber solution was analyzed for carbonate and bicarbonate, and the true HCl level recalculated.

Solution Process - HCl which is produced by catalyst deactivation will be neutralized by the present invention provided that there is adequate residence time and proper mixing in the process. Different designs in different processes, and even in the same process, may result in different amounts of HCl observed. In a solution process, the residence time is measured from the point of injection to the pressure control valve before the first stage separation. For the experiments in Table 8, the residence time is 1.3 minutes and Reynolds numbers are less than 100.

Due to the very short residence time and poor mixing not all the HCl produced during catalyst deactivation is neutralized by the catalyst deactivators at the levels used. For example, the vent gas from the

separator during runs using calcium stearate still contained over 30 ppm HCl. Examples of the invention demonstrate that the compositions of the present invention are as good as, or better than, calcium stearate in removing HCl from the same process stream at the same levels and same catalyst efficiency. Production rate and polymer properties were also constant.

As a further indication of the ability of the compounds to remove HCl from the process, the chloride level in the polymer was found to increase as the HCl level in the vent gas was reduced, indicating that the chloride is "tied-up" by the composition and thus remains in the polymer but is inactive and does not degrade polymer properties or cause corrosion to processing equipment under the normal processing conditions of the resins.

TABLE II - HCl NEUTRALIZATION

| Catalyst Deactivator | Calcium Stearate[a] | Calcium Stearate[a] | Expt. #3[b,d] | Expt. #4[b,d] | Expt. #5[c,e] | Expt. #6[c,e] |
|---|---|---|---|---|---|---|
| Level of Catalyst Deactivator in Polymer ppm | 1000 | 1500 | 700 | 1000 | 500 | 1000 |
| Catalyst Efficiency MM polymer/Ti | .250 | .300 | .400 | .400 | .350 | .350 |
| Melt Flow value | 23.5 | 26.1 | 24.6 | 25.2 | 25.3 | 25.8 |
| Density (g/cc) | .9202 | .9230 | .9203 | .9193 | .9199 | .9214 |
| Average HCl level, ppm In Vent | 38 | 35 | 41 | 32 | 5.2 | 1.3 |

a = Comparative Example, contains about 2.7% adsorbed water.

b = $Mg_{0.69}Al_{0.31}(OH)_2(CO_3)_{0.15}\cdot 0.54H_2O$ contains about 7% absorbed water.

c = $Mg_{0.5}Al_{0.5}(OH)_{2.5}Cl_{0.25}$ contains about 2% absorbed water

d = < 5 micron particle size

e = < 1 micron particle size

WE CLAIM:

1. In a process for the manufacture of polymers which employ catalysts which remain in the polymer and are preferably deactivated prior to finishing; the improvement which comprises injecting into the reaction mixture at the end of the desired reaction (a) prior to removing such reaction mixture from the reactor system or (b) after removal of such reaction mixture from the reactor system but prior to separation of the resultant polymer from the reaction mixture, a sufficient amount of a composition having elements and groups and a ratio of the elements and groups contained therein represented by the general formula $A_x^aB_{1-x}^b(OH)_yC_z^c \cdot nH_2O$ wherein A and B are each one or more metal elements having valences a and b of 1 or 2 and 2 or 3 respectively; z=0 to (ax+b(1-x)-y)/c; x has a value of from >0 to <1, y has a value of from >2 to about ax+b(1-x)-cz; n has a value from 0 to about 1; C is an anion having a valence c of 1, 2 or 3 such as, for example, $CO_3^=$, $HCO_3^-$, $PO_4^{-3}$, $HPO_4^=$, $H_2PO_4^-$, $SO_4^=$, $HSO_4^-$, $S^=$, $HS^-$, $SO_3^{-2}$, $S_2O_5^{-2}$, $S_2O_4^{-2}$, $S_2O_2^{-2}$, $S_2^{-2}$, $CN^-$, $C_2^{-2}$, $I_3^-$, $HPO_3^{-2}$, $H_2P_2O_5^{2-}$, $NH^{2-}$, $NH_2^-$, $NHOH^-$, $N_2H_3^-$, $NO_2^-$, $ClO_2^-$, $ClO^-$, $O^{-2}$, $F^-$, $Cl^-$, $Br^-$, $I^-$, $RCO_2^-$, and $R(COO)_2^{-2}$, where R may be any alkyl or aryl moiety, such that the catalyst in said polymerization process is effectively deactivated if such catalysts are acids or if acid is produced

during the process of deactivation, the acid is effectively neutralized by the catalyst deactivator.

2. The process of Claim 1 wherein in the formula A is magnesium and B is aluminum.

3. The process of Claim 2 wherein the composition is coated with a surface agent.

4. The process of Claim 1 wherein the catalyst to be deactivated is a Ziegler-Natta type catalyst.

5. The process of Claim 1 wherein the catalyst deactivator is injected into the reaction mixture at a point at the end or just after the reactor system.

6. The process of Claim 1 wherein ethylene or a mixture of ethylene and one or more α-olefins having from 3 to 10 carbon atoms is polymerized.

7. The process of Claim 6 wherein ethylene or a mixture of ethylene and at least one of butene-1, hexene-1 or octene-1 is polymerized and the catalyst contains titanium.

8. The process of Claim 1 wherein the temperature is from 50°C to 300°C and the pressure is from 150 psig (1034 kPa) to 5000 psig (34.5 MPa).

9. The process of Claim 1 wherein in the formula x is greater than 0 but less than 0.5 and y is greater than 2.

0139930

European Patent Office

# EUROPEAN SEARCH REPORT

Application number

EP 84 10 9432

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | EP-A-0 118 092 (KYOWA CHEMICAL INDUSTRY)<br>* Claim 1; page 2, line 31 - page 3, line 1; page 4, lines 2-22; page 14, lines 11-19; examples 2,4-6 *<br>--- | 1,2,4-9 | C 08 F 6/02 |
| Y | FR-A-2 444 062 (KYOWA CHEMICAL INDUSTRY)<br>* Claim 1; page 5, line 33 - page 6, line 12; page 9, line 11 - page 11, line 3; examples *<br>--- | 1-4,6-8 | |
| Y | GB-A-2 075 989 (KYOWA CHEMICAL INDUSTRY)<br>* Claims; page 3, lines 18-32; page 3, line 36 - page 4, line 6; examples *<br>--- | 1-4,6-8 | TECHNICAL FIELDS SEARCHED (Int. Cl.4) |
| Y | FR-A-1 204 391 (PECHINEY)<br>* Abstract *<br>----- | 1-4,6-8 | C 08 F<br>C 08 L<br>C 08 K |

The present search report has been drawn up for all claims

| Place of search | Date of completion of the search | Examiner |
|---|---|---|
| THE HAGUE | 30-11-1984 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82